# DEMANDE DE BREVET EUROPEEN

(11) **EP 4 220 582 A1**
(43) Date de publication de la demande: **02.08.2023**
(21) Numéro de dépôt: 23153295.3
(22) Date de dépôt: 25.01.2023
(51) Int. Cl.: G06V 20/56, G06V 20/70, G06V 10/774, B61L 15/00, B61L 25/00

(54) **PROCÉDÉ ET SYSTÈME D'ANNOTATION AUTOMATIQUE DE SÉQUENCE D'IMAGES DE CONDUITE D'UN MATÉRIEL ROULANT FERROVIAIRE**

(30) Priorité: 27.01.2022 FR 2200699
(71) Demandeur: SNCF Voyageurs, 93200 Saint-Denis (FR)
(72) Inventeur: DE LAHARPE, Philippe, 92160 ANTONY (FR); LELIONNAIS, Cédrick, 49100 ANGERS (FR)
(74) Mandataire: Delaveau, Sophie

(57) **Abrégé**

L'invention porte principalement sur un procédé de sélection et d'annotation d'au moins une image de conduite préalablement acquise par des moyens d'acquisition horodatée d'images (3) installés sur un matériel roulant (2) qui comprend en outre des moyens d'acquisition et d'enregistrement horodaté automatique (4) de données dites de conduite comportant au moins des données de signalisation, et des moyens de traitement des données de conduite et d'annotation des images, lequel procédé comprend les étapes suivantes : identification d'une donnée de signalisation horodatée associée à un équipement de signalisation ; identification d'une première donnée d'horodatage associée à ladite donnée de signalisation ; sélection de l'image de conduite préalablement acquise et identification d'une seconde donnée d'horodatage associée à ladite image de conduite sélectionnée, la différence entre les première et seconde données d'horodatage étant inférieure à une valeur déterminée ; et annotation de l'image acquise sélectionnée avec la donnée de signalisation considérée.

## Description

L'invention s'inscrit dans le domaine de la conduite autonome de véhicules, et notamment de matériels roulants ferroviaires.

L'invention concerne plus particulièrement la génération d'une base de données d'entrainement pour un système de vision artificielle prévu pour détecter et/ou classifier des objets.

La conduite autonome de véhicule est en plein essor dans tous les domaines relatifs au transport, qu'il s'agisse de véhicules automobiles autonomes ou de moyens de transport collectif ou de marchandises, en particulier les matériels roulants ferroviaires.

Pour être sécuritaire, ces moyens de transport autonomes sont équipés de systèmes de vision artificielle prévus pour détecter et identifier tous types d'obstacles et tous types de signalisation routière ou ferroviaire. Ces systèmes de vision sont équipés d'algorithmes d'intelligence artificielle, par exemple des réseaux de neurones convolutifs, dont la fonction est précisément de détecter et classifier les obstacles et la signalisation pour générer une action de conduite appropriée.

Ces réseaux de neurones sont en mesure d'atteindre des performances de détection et de classification très élevées, en réalisant moins d'une erreur de classification pour un million d'images traitées. Ce niveau de performance, essentiel pour assurer la conduite sécurisée des véhicules autonomes, est atteint grâce à l'apprentissage des réseaux de neurones via des bases de données : les paramètres du réseau de neurones sont déterminés en lui apprenant à associer une image avec une information déterminée, par exemple un obstacle ou un panneau de signalisation. En d'autres termes, on utilise des images annotées pour apprendre au système de vision artificielle à reconnaitre l'ensemble des situations auxquelles il pourrait être potentiellement confronté.

L'inconvénient réside dans le nombre très important d'images annotées nécessaires à l'entrainement d'un tel réseau de neurones, typiquement plusieurs millions, voire dizaines de millions d'images annotées. En outre, plus la variété des situations possibles est importante, plus la base de données doit l'être aussi.

Il est connu, particulièrement dans le domaine de la conduite autonome de véhicules automobiles, d'utiliser les conducteurs humains pour annoter des images capturées par des systèmes de vision installés sur les véhicules desdits conducteurs. Le nombre élevé de conducteurs permet ainsi d'acquérir un grand nombre d'images annotées. Une autre méthode, toujours dans le domaine de la conduite autonome de véhicules automobiles, consiste à mettre à contribution les millions d'internautes qui labellisent quotidiennement des images ou des morceaux d'images via les mesures de sécurité de type authentification par question-réponse, plus connues sous le nom de CAPTCHA (de l'anglais « Completely Automated Public Turing test to tell Computers and Humans Apart »).

Cependant, ces méthodes sont souvent source d'erreur et exigent la plupart du temps une validation finale de nature humaine.

En outre, certains domaines, et en particulier le domaine du transport ferroviaire, ne disposent pas d'un nombre important de conducteurs certifiés, et il n'est pas toujours possible de mobiliser ces conducteurs pour s'atteler spécifiquement à l'annotation d'images.

L'invention a pour objet de proposer un procédé et un système d'annotation automatique d'images de conduite fiable et performant, et qui ne nécessite pas d'intervention supplémentaire de la part d'un utilisateur humain.

À cet effet, l'invention vise un procédé de sélection et d'annotation d'au moins une image de conduite préalablement acquise par des moyens d'acquisition horodatée d'images installés sur un matériel roulant qui comprend en outre des moyens d'acquisition et d'enregistrement horodaté automatique de données dites de conduite comportant au moins des données de signalisation, et des moyens de traitement des données de conduite et d'annotation des images, lequel procédé comprend les étapes suivantes :
- Identification d'une donnée de signalisation horodatée associée à un équipement de signalisation ;
- Identification d'une première donnée d'horodatage associée à ladite donnée de signalisation ;
- Sélection de l'image de conduite préalablement acquise et identification d'une seconde donnée d'horodatage associée à ladite image de conduite sélectionnée, la différence entre les première et seconde données d'horodatage étant inférieure à une valeur déterminée, et
- Annotation de l'image acquise sélectionnée avec la donnée de signalisation considérée.

Le procédé peut également comporter les caractéristiques optionnelles suivantes considérées isolément ou selon toutes les combinaisons techniques possibles :
- Les moyens d'annotation assurent l'annotation d'une séquence temporelle d'images acquises selon les étapes suivantes :
   - Identification d'une première donnée temporelle initiale associée à l'approche du matériel roulant de l'équipement de signalisation ;
   - Identification d'une première donnée temporelle finale associée au passage du matériel roulant au niveau de l'équipement de signalisation ;
   - Identification d'une seconde donnée temporelle initiale et d'une seconde donnée temporelle finale associées à une séquence d'images de conduite préalablement acquises, la différence entre les première et seconde données temporelles initiales d'une part et la différence entre les première et seconde données temporelles finales d'autre part étant chacune inférieure à la valeur déterminée, et
   - Sélection de la séquence d'images et annotation de chaque image de ladite séquence avec la donnée de signalisation considérée.
- Si la différence entre les première et seconde données temporelles initiales et/ou la différence entre les première et seconde données temporelles finales est supérieure ou égale à la valeur déterminée, ledit procédé comprend les étapes supplémentaires suivantes :
   - Identification d'une donnée horodatée de détection manuelle de l'équipement de signalisation par le conducteur du matériel roulant via des moyens d'acquisition manuelle des données de conduite ;
   - Identification d'une donnée horodatée d'enregistrement par les moyens d'acquisition automatique de l'action de détection manuelle ;
   - Calcul du décalage temporel entre la donnée horodatée de détection manuelle et la donnée horodatée d'enregistrement de l'action de détection, et
   - Recalage temporel de la séquence d'images en utilisant le décalage temporel calculé.
- Le procédé comprend une étape d'encadrement d'une zone d'intérêt de chaque image annotée.
- La première donnée temporelle initiale correspond à un temps seuil de détection par le conducteur, égal au rapport entre la distance seuil de détection séparant le matériel roulant de l'équipement de signalisation et la vitesse dudit matériel roulant, les données de conduite comportant notamment des données de vitesse et de localisation du matériel roulant.
- La première donnée temporelle initiale dépend de l'instant de l'action de détection manuelle réalisée par le conducteur.

L'invention vise également un système de détection et d'annotation d'au moins une image de conduite pour un matériel roulant, notamment un matériel roulant ferroviaire, comprenant des moyens d'acquisition et d'enregistrement horodaté d'images installés sur le matériel roulant qui comprend en outre des moyens d'acquisition horodatée de données dites de conduite comportant au moins des données de signalisation, et des moyens de traitement des données de conduite et d'annotation des images.

Le système peut également comporter les caractéristiques optionnelles suivantes considérées isolément ou selon toutes les combinaisons techniques possibles :
- Les moyens d'acquisition de données de conduite comprennent des premiers moyens d'horodatage desdites données de conduite, et en ce que les moyens d'acquisition d'images comprennent des seconds moyens d'horodatage desdites images acquises.
- Les moyens d'acquisition automatique horodatée d'images et les moyens d'acquisition horodatée automatique de données de conduite sont en outre aptes à acquérir des données de localisation et de vitesse du matériel roulant.
- Le système comprend des moyens d'acquisition manuelle des données de conduite.

L'invention vise enfin un matériel roulant ferroviaire comprenant un système de détection et d'annotation d'au moins une image de conduite tel que décrit précédemment apte à mettre en oeuvre le procédé de détection et d'annotation d'au moins une image tel que décrit précédemment.

D'autres caractéristiques et avantages de l'invention ressortiront clairement de la description qui en est donnée ci-dessous, à titre indicatif et nullement limitatif, en référence à la figure annexée :

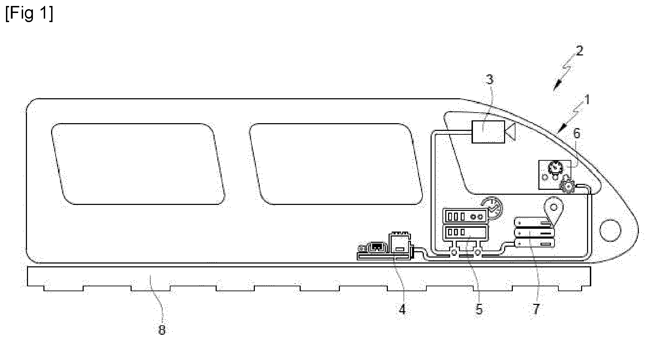

[Fig 1] La figure 1 représente un schéma du système de détection et d'annotation d'images selon l'invention.

Il est précisé que la figure représente essentiellement un mode de réalisation de l'objet de l'invention mais qu'il peut exister d'autres modes de réalisation qui répondent à la définition de l'invention.

L'invention concerne un système 1 et un procédé d'annotation automatique d'une séquence d'images acquises, en utilisant des données de signalisation.

En particulier, cette invention est applicable au domaine des transports et plus particulièrement au domaine du transport ferroviaire. L'invention vise à générer des bases de données d'images annotées en vue de leur utilisation ultérieure pour entrainer des réseaux de neurones (ou tout autre système et/ou logiciel d'intelligence artificielle fonctionnant par apprentissage) prévus pour être installés dans des systèmes de vision artificielle permettant la conduite autonome des matériels roulants ferroviaires 2.

En référence à la figure 1, le système de sélection et d'annotation d'images de conduite 1 va maintenant être décrit.

Le matériel roulant ferroviaire 2 est par exemple un véhicule ferroviaire de transport de marchandises ou de voyageurs, circulant sur une voie ferrée 8 au bord de laquelle des équipements de signalisation sont installés. Dans la suite de la description, on utilisera le terme train 2 pour qualifier ces véhicules ferroviaires.

Le système de sélection et d'annotation d'images 1 comprend des moyens d'acquisition et d'enregistrement horodaté automatique 4 de données dites de conduite. Ces données de conduite correspondent à au moins une partie des données acquises et enregistrées par les moyens précités 4, et comprennent notamment des données de vitesse du train, des données de signalisation (c'est-à-dire indiquant le type d'équipement de signalisation ou le type de signal émis par un équipement de signalisation déterminé), des données relatives aux actions de freinage, aux signaux d'alerte lumineux ou sonores, à la localisation du train 2 sur la voie 8. En outre, toutes ces données de conduite acquises sont horodatées par des premiers moyens d'horodatage compris dans les moyens d'acquisition automatique 4 de données de conduite, puis sont enregistrées dans un premier dispositif de stockage prévus à cet effet.

A titre d'exemple, ces moyens d'acquisition automatique 4 et d'enregistrement des données de conduite peuvent être les boites noires installés dans les trains - par exemple le système ATESS (pour « Acquisition et Traitement des Evénements de Sécurité en Statique ») utilisé par la Société nationale des chemins de fer français. Alternativement et avantageusement, toutes ces données sont enregistrées dans un espace de stockage d'un serveur distant au sein d'une base de données centralisée.

Le système de sélection et d'annotation d'images 1 comprend des moyens d'acquisition d'images 3, par exemple une caméra haute définition installée à l'avant du train. En outre, ces moyens d'acquisition d'images 3 comprennent des seconds moyens d'horodatage 5 des images acquises, lesquelles images sont enregistrées dans un second dispositif de stockage prévu à cet effet. Par ailleurs, les moyens d'acquisition d'images 3 sont également reliés à des moyens de géolocalisation 7 de sorte que chaque image horodatée soit associée à une position du train 2.

Le système de l'invention comprend également des moyens d'acquisition manuelle 6 des données de conduite. Cette acquisition manuelle est réalisée par le conducteur via un système de Veille Automatique à Contrôle du Maintien d'appui (communément appelé VACMA) installé pour des raisons de sécurité dans les trains. En effet, pour s'assurer de la vigilance du conducteur, ce dernier doit périodiquement effectuer des opérations d'appui ou de relâchement sur des contacteurs électriques faisant partie de ce système VACMA 6. Si le conducteur n'effectue pas ces opérations, le train 2 émet une alerte et/ou s'arrête automatiquement.

Parmi ces opérations de vigilance, le conducteur indique par une pression sur un des contacteurs du système VACMA 6 qu'il a bien repéré un équipement de signalisation ou un signal déterminé émis par ledit équipement. Cette donnée de signalisation manuelle, générée suite à l'appui par le conducteur sur le contacteur électrique, est horodatée par les seconds moyens d'horodatage 5. Par ailleurs, les moyens d'acquisition automatique 4 des données de conduite acquièrent et enregistrent une donnée de détection de l'appui sur le système VACMA 6, laquelle donnée de détection est horodatée par les premiers moyens d'horodatage.

Enfin, le système 1 selon l'invention comprend des moyens informatiques de traitement des données de conduite et des images, reliés aux premier et second dispositifs de stockage, ainsi qu'aux moyens d'acquisition d'images 3, aux moyens d'acquisition automatique 4 des données de conduite et aux moyens d'acquisition manuelle 6 des données de conduite. Ces moyens de traitements connaissent notamment les caractéristiques de la caméra haute définition, en particulier sa distance focale. En outre, les moyens de traitements comprennent des données permettant d'identifier le type de train, le numéro du train et le type de voie ferrée 8.

Selon l'invention, un procédé de détection et d'annotation automatique d'une séquence d'images préalablement acquises va maintenant être décrit. Ce procédé peut être mis en oeuvre en temps réel à bord du train 2, via les moyens de traitement des données.

Selon une première étape, et suite à l'acquisition d'une séquence d'images de conduite, les moyens de traitement identifient, dans les données de conduite horodatées par les premiers moyens d'horodatage, celles qui correspondent à des données de signalisation sur une période de temps déterminée, c'est-à-dire des données qui identifient un équipement de signalisation ou un signal déterminé émis par cet équipement sur ladite période de temps déterminée.

La période de temps est sélectionnée par les moyens de traitement de la manière suivante : un temps initial correspondant à un temps seuil de détection de la signalisation par le conducteur et un temps final correspondant au passage de la signalisation par le train 2. Plus précisément, ce temps seuil est corrélé à une distance minimale séparant le train 2 de l'équipement de signalisation, et encore plus précisément, ce temps seuil est égal au rapport entre la distance minimale et la vitesse dudit train 2. La vitesse du train 2 étant connue à chaque instant, les moyens de traitement déterminent aisément ce temps seuil.

De manière alternative, le temps initial correspond à un temps de référence caractérisé par une action du conducteur indiquant qu'il a bien identifié un équipement de signalisation ou un signal émis par cet équipement, lequel temps de référence peut le cas échéant être corrigé d'un temps de réaction caractéristique du conducteur ou déterminé par les moyens de traitement. Ce temps de référence correspond à une distance séparant le train 2 de l'équipement de signalisation supérieure à la distance minimale seuil.

Selon une deuxième étape, les moyens de traitement identifient, parmi les images acquises, la séquence d'images acquises entre le temps seuil (ou le temps de référence le cas échéant) et le temps de passage, via les informations d'horodatages des images obtenue par les seconds moyens d'horodatage 5.

Selon une troisième étape, les moyens de traitement calculent une première différence temporelle entre le temps seuil et le temps de passage obtenus via les premiers moyens d'horodatage, et une seconde différence temporelle entre le temps seuil et le temps de passage obtenus via les seconds moyens d'horodatage 5. Si le décalage entre la première et la seconde différences temporelles est inférieure à une valeur déterminée, les moyens de traitement considèrent que les deux horodatages sont bien simultanés et le procédé passe à une étape de sélection et d'annotation de la séquence d'images qui sera décrite plus loin.

Si le décalage entre la première et la seconde différence temporelle est supérieur ou égal à la valeur déterminée, alors les moyens de traitement effectuent un recalage entre les données de conduites et les images acquises. Ce recalage peut être fait de plusieurs manières.

Selon une première variante, les moyens de traitement identifient une position du train 2 mesurée par les moyens de géolocalisation 7, et horodatée par les seconds moyens d'horodatage 5, entre le temps seuil (ou le cas échéant le temps de référence) et le temps de passage. Puis, les moyens de traitement recherchent ces mêmes coordonnées de position mesurée par les moyens d'acquisition automatique et d'enregistrement 4 des données de conduite, laquelle position est horodatée par les premiers moyens d'horodatage.

Enfin, les moyens de traitement déterminent le décalage temporel entre les premier et second horodatages respectivement mesurés par les premiers et seconds moyens d'horodatage 5, puis utilisent ce décalage pour recaler les données de conduite avec les images de conduite, par exemple en utilisant une méthode d'optimisation des moindres carrés.

Selon une seconde variante, les moyens de traitement identifient une donnée, horodatée par les seconds moyens d'horodatage 5, de détection manuelle de l'équipement de signalisation caractérisée par l'appui sur un contacteur électrique du système VACMA 6. Puis les moyens de traitement identifient une donnée, horodatée par les premiers moyens d'horodatage, correspondant à la détection et à l'enregistrement par les moyens d'acquisition automatique 4 de l'appui par le conducteur sur le contacteur.

Enfin, les moyens de traitement déterminent le décalage temporel entre les premier et second horodatages respectivement mesurés par les premiers et seconds moyens d'horodatage 5, puis utilisent ce décalage pour recaler les données de conduite avec les images de conduite, par exemple en utilisant une méthode d'optimisation des moindres carrés.

Selon un mode de réalisation avantageux et pour encore améliorer le recalage des données de conduites et des images, les deux variantes de recalage peuvent être appliquées successivement ou en parallèle par les moyens de traitement.

Finalement, le procédé met en oeuvre l'étape de sélection de la séquence d'images entre le temps seuil (ou le cas échéant le temps de référence) et le temps de passage, et chaque image de la séquence est annotée par les moyens de traitement avec les informations relatives à l'équipement de signalisation ou au signal émis par ledit équipement de signalisation. De manière avantageuse et afin de limiter la durée de traitement des données, le procédé peut comprendre une étape préalable d'encadrement des zones d'intérêt dans chaque image, lesquelles zones font l'objet de l'annotation par les moyens de traitement.

Bien entendu, le procédé peut également annoter une unique image avec des données de signalisation. Le procédé est dans ce cas simplifié et comprend les étapes successives de :
- Identification d'une donnée de signalisation horodatée associée à l'équipement de signalisation ;
- Identification d'une première donnée d'horodatage associée à ladite donnée de signalisation ;
- Identification d'une seconde donnée d'horodatage associée à une image de conduite préalablement acquise, la différence entre les deux données d'horodatage étant inférieure à la valeur déterminée, et
- Annotation de l'image acquise avec la donnée de signalisation considérée.

De manière avantageuse, lorsqu'un temps de référence lié à l'instant de détection de la signalisation par le conducteur est utilisé par les moyens de traitement, ces derniers calculent la différence entre le temps seuil et ce temps de référence. Cette différence pourra le cas échéant être utilisée comme valeur étalon pour comparer la performance d'un système de vision artificielle apte à mettre en oeuvre le procédé de l'invention avec celle d'un utilisateur humain.

Le système 1 et le procédé de l'invention permettent d'annoter de manière fiable et peu coûteuse des images ou séquences d'images en utilisant les informations de conduite déjà acquises par le train. En plus de fournir une base de données de reconnaissance des équipements de signalisation et de leurs signaux, le procédé permet de s'affranchir des conditions climatiques difficiles qui nuisent à la qualité d'images, puisqu'un équipement de signalisation est automatiquement associé à une donnée de signalisation provenant des données de conduite. En d'autres termes, pour chaque équipement de signalisation et chaque signal émis, la base de données comprendra des images annotées de qualité différentes, ce qui améliore encore la reconnaissance de la signalisation dans le cadre de la conduite autonome.

## Revendications

1. Procédé de sélection et d'annotation d'au moins une image de conduite préalablement acquise par des moyens d'acquisition horodatée (3) d'images installés sur un matériel roulant (2) qui comprend en outre des moyens d'acquisition et d'enregistrement horodaté automatique (4) de données dites de conduite comportant au moins des données de signalisation, et des moyens de traitement des données de conduite et d'annotation des images, lequel procédé comprend les étapes suivantes :
• Identification d'une donnée de signalisation horodatée associée à un équipement de signalisation ;
• Identification d'une première donnée d'horodatage associée à ladite donnée de signalisation ;
• Sélection de l'image de conduite préalablement acquise et identification d'une seconde donnée d'horodatage associée à ladite image de conduite sélectionnée, la différence entre les première et seconde données d'horodatage étant inférieure à une valeur déterminée, et
• Annotation de l'image acquise sélectionnée avec la donnée de signalisation considérée.

2. Procédé selon la revendication précédente, **caractérisé en ce que** les moyens d'annotation assurent l'annotation d'une séquence temporelle d'images acquises selon les étapes suivantes :
• Identification d'une première donnée temporelle initiale associée à l'approche du matériel roulant (2) de l'équipement de signalisation ;
• Identification d'une première donnée temporelle finale associée au passage du matériel roulant (2) au niveau de l'équipement de signalisation ;
• Identification d'une seconde donnée temporelle initiale et d'une seconde donnée temporelle finale associées à une séquence d'images de conduite préalablement acquises, la différence entre les première et seconde données temporelles initiales d'une part et la différence entre les première et seconde données temporelles finales d'autre part étant chacune inférieure à la valeur déterminée, et
• Sélection de la séquence d'images et annotation de chaque image de ladite séquence avec la donnée de signalisation considérée.

3. Procédé selon la revendication précédente, **caractérisé en ce que**, si la différence entre les première et seconde données temporelles initiales et/ou la différence entre les première et seconde données temporelles finales est supérieure ou égale à la valeur déterminée, ledit procédé comprend les étapes supplémentaires suivantes :
• Identification d'une donnée horodatée de détection manuelle de l'équipement de signalisation par le conducteur du matériel roulant (2) via des moyens d'acquisition manuelle (6) des données de conduite ;
• Identification d'une donnée horodatée d'enregistrement par les moyens d'acquisition automatique (4) de l'action de détection manuelle ;
• Calcul du décalage temporel entre la donnée horodatée de détection manuelle et la donnée horodatée d'enregistrement de l'action de détection, et
• Recalage temporel de la séquence d'images en utilisant le décalage temporel calculé.

4. Procédé selon l'une quelconque des revendications précédentes, **caractérisé en ce qu'**il comprend une étape d'encadrement d'une zone d'intérêt de chaque image annotée.

5. Procédé selon l'une quelconque des revendications 2 à 4, **caractérisé en ce que** la première donnée temporelle initiale correspond à un temps seuil de détection par le conducteur, égal au rapport entre la distance seuil de détection séparant le matériel roulant (2) de l'équipement de signalisation et la vitesse dudit matériel roulant (2), les données de conduite comportant notamment des données de vitesse et de localisation du matériel roulant (2).

6. Procédé selon la revendication 3 ou 4, **caractérisé en ce que** la première donnée temporelle initiale dépend de l'instant de l'action de détection manuelle réalisée par le conducteur.

7. Système de détection et d'annotation (1) d'au moins une image de conduite pour un matériel roulant (2), notamment un matériel roulant ferroviaire, comprenant des moyens d'acquisition et d'enregistrement horodaté (3) d'images installés sur le matériel roulant qui comprend en outre des moyens d'acquisition horodatée (4) de données dites de conduite comportant au moins des données de signalisation, et des moyens de traitement des données de conduite et d'annotation des images.

8. Système (1) selon la revendication précédente, **caractérisé en ce que** les moyens d'acquisition automatique (4) de données de conduite comprennent des premiers moyens d'horodatage desdites données de conduite, et **en ce que** les moyens d'acquisition d'images (3) comprennent des seconds moyens d'horodatage (5) desdites images acquises.

9. Système (1) selon la revendication 7 ou 8, **caractérisé en ce que** les moyens d'acquisition horodatée (3) d'images et les moyens d'acquisition horodatée automatique (4) de données de conduite sont en outre aptes à acquérir des données de localisation et de vitesse du matériel roulant (2).

10. Système (1) selon la revendication 8 ou 9, **caractérisé en ce qu'**il comprend des moyens d'acquisition manuelle (6) des données de conduite.

11. Matériel roulant ferroviaire (2) comprenant un système de détection et d'annotation (1) d'au moins une image de conduite selon l'une quelconque des revendications 7 à 10 apte à mettre en oeuvre le procédé de détection et d'annotation d'au moins une image selon l'une quelconque des revendications 1 à 6.
